# EUROPÄISCHE PATENTSCHRIFT

(11) **EP 0 820 425 B1**
(45) Veröffentlichungstag und Bekanntmachung des Hinweises auf die Patenterteilung: **19.07.2000**
(21) Anmeldenummer: 96900844.0
(22) Anmeldetag: 18.01.1996
(51) Int. Cl.: C05F 17/02

(54) **VERFAHREN ZUR KOMPOSTIERUNG VON ORGANISCHEN ABFÄLLEN UND/ODER KLÄRSCHLAMM UND VORRICHTUNG ZUR DURCHFÜHRUNG DIESES VERFAHRENS**
METHOD OF COMPOSTING ORGANIC WASTE AND/OR SEWAGE SLUDGE, AND A DEVICE FOR CARRYING OUT THE METHOD
PROCEDE DE FORMATION DE COMPOST A PARTIR DE DECHETS ORGANIQUES ET/OU DE BOUES DE CURAGE, ET DISPOSITIF POUR LA MISE EN OEUVRE DE CE PROCEDE

(30) Priorität: 11.04.1995 DE 19513701
(43) Veröffentlichungstag der Anmeldung: 28.01.1998
(73) Patentinhaber: FRESENIUS UMWELTTECHNIK GMBH, 45699 Herten (DE); Maschinenfabrik Ernst Hese GmbH, 45881 Gelsenkirchen (DE)
(72) Erfinder: KANITZ, Jürgen, D-44805 Bochum (DE)
(74) Vertreter: Vomberg, Friedhelm, Dipl.-Phys.
(86) Internationale Anmeldenummer: DE9600097
(87) Internationale Veröffentlichungsnummer: WO9632361

(56) Entgegenhaltungen:
- EP-A- 0 040 147
- EP-A- 0 255 467
- DE-A- 2 057 413
- DE-A- 2 451 284
- DE-A- 3 830 289
- DE-A- 4 000 510
- DE-A- 4 301 116
- DE-B- 1 592 729
- DE-C- 4 022 328

## Beschreibung

Die Erfindung betrifft ein Verfahren zur Kompostierung von organischen Abfällen und/oder Klärschlamm, welche als Haufwerk in einem abgeschlossenen System, vorzugsweise einem Belüftungsreaktor mit einer für den Rottevorgang notwendigen Luft durchströmt werden, deren Menge in Abhängigkeit von den aus dem System gewonnenen Meßwerten regelbar ist.

Die Erfindung betrifft ferner eine Vorrichtung zur Durchführung dieses Verfahrens mit einem geschlossenen Belüftungsreaktor, in dessen Boden ein Gebläse mit einem Verteiler zum Einblasen der Luft im wesentlichen über den gesamten Querschnitt des von dem Belüftungsreaktor umschlossenen Haufwerkes und in dem mindestens ein in das Haufwerk hineinragender Temperaturmeßfühler vorgesehen sind, die über eine Regeleinrichtung miteinander verbunden sind, und der eine Abgasleitung aufweist.

Ein solches Verfahren und eine solche Vorrichtung werden in den DE-A-25 41 070 beschrieben.

Nach dem dortigen Verfahren sollen organische Abfälle und/oder Klärschlamm als sogenanntes Haufwerk einen geschlossenen Belüftungsreaktor von oben nach unten durchlaufen, wobei das Rottematerial von der für den Rottevorgang notwendigen Luft durchströmt werden soll. Der Belüftungsreaktor arbeitet somit chargenweise, also nicht kontinuierlich, wobei die Luftzufuhr über einen Schaltregler gesteuert wird, der ein Ventil in der Luftzuführungsleitung, die zu der Sohle des Behälters führt, entweder ganz öffnet oder ganz schließt, so daß eine diskontinuierliche Belüftung des Rottegutes stattfindet. Soweit ein Drosselventil verwendet wird, so ist dies zur vollständigen Unterbrechung der Luftzufuhr vorgesehen, um den Bakterien Zeit zum Veratmen des Sauerstoffes zu lassen, so daß nach dem beschriebenen Verfahren an ein diskontinuierliches Beblasen des Rottegutes gedacht ist. Durch getrennt voneinander regelbare Saug- und Druckgebläse wird durch Soll-Ist-Vergleich in Abhängigkeit des CO₂- oder O₂-Gehaltes der Abluft die Menge und Strömungsgeschwindigkeit der eingegebenen Luft geregelt, wobei in Abhängigkeit mindestens zweier, vorzugsweise im oberen und unteren Drittel des Haufwerkes gewonnener Feuchtigkeitsmeßwerte, die mit vorgegebenen Sollwerten verglichen werden, der an der Sohle des Haufwerkes zugeführten Luft ggf. fein verteiltes Wasser zugesetzt wird und die an der Sohle des Haufwerkes zugeführte Luft auf mindestens 30°C bis 50°C, vorzugsweise 40°C, aufgeheizt wird. Auch wenn das mit dem Raum oberhalb des vom Belüftungsreaktor umschlossenen Haufwerkes verbundenes Sauggebläse eine höhere Leistung als das Druckluft-Gebläse an der Sohle des Belüftungsreaktors hat, ist lediglich vorgesehen, den jeweils diskontinuierlich eingegebenen Druckluftüberschuß mittels des Sauggebläses abzubauen.

Ähnliche Verfahren werden in der DE-B-22 52 188 und der DE-B-22 53 009 beschrieben.

Auch in der AT-C-372 672 wird ein Verfahren zur aeroben Verrottung und/oder Trocknung von organischen Abfallstoffen in einem Verrottungsbunker beschrieben, der aus einer oder fallweise aus mehreren be- bzw. entlüft- und beheizbaren, untereinander in Etagen angeordneten Verrottungskammern gebildet ist. Hierbei soll das entstehende Reaktionsgas abschnittsweise quer zur Durchgangsrichtung des Gutes abgesaugt und die abgesaugte Reaktionsgasmenge fallweise analysiert und das Ergebnis der Abschnittsanalyse zur Steuerung von Belüftung und Temperatur herangezogen werden.

Die EP 0 065 495 A1 beschreibt ein Freiluft-Kompostierverfahren, bei dem am Rottefuß eine umsteuerbare Blas- und Saugeinrichtung zur Luftzufuhr und zur Luftabsaugung eingesetzt wird.

Die Blas- und Saugeinrichtung wird in Abhängigkeit der Gehalte an O₂, CO₂, des pH-Wertes und der Rottefeuchte gesteuert. Auch mit diesem Verfahren ist lediglich ein geringfügiger Druckluftaufbau in der Rotte und ein anschließender Abbau möglich.

Um zum Kompostieren von Faulschlamm ein gleichmäßiges Trocknen zu gewährleisten, wird in der DE-A-29 33 565 vorgeschlagen, die Faulschlamm-Miete über einer langgestreckten perforierten Leitung auszubilden, die über eine Luft-Rohrleitung mit einem in zwei Richtungen arbeitenden Gebläse verbunden ist. Dieses Gebläse wird durch eine Steuerschaltung oder Zeitsteuerung gesteuert, um abwechselnd in die Leitung Luft einzublasen und aus dieser Luft abzuziehen, so daß Luft in beabstandeten Zeitintervallen in den Haufen geblasen wird, während in den anderen Zeitintervallen Luft aus dem Haufen zurück in die Leitung gesaugt wird.

Auch nach dem in der EP 0 255 467 A2 beschriebenen Verfahren soll ein geschlossener Behälter mit einer Druck-Saugleitung verwendet werden, über den die Strömungsrichtung des Luftstromes in Abhängigkeit von der sich während der Fermentation einstellenden Temperatur und/oder Feuchtigkeit der Rückstände zeitweilig umgekehrt wird.

Es ist Aufgabe der vorliegenden Erfindung, das eingangs genannte Verfahren und die ebenfalls eingangs genannte Vorrichtung derart weiterzubilden, daß eine gleichmäßige Fermentierung der Rotte bei geringstmöglichem verfahrenstechnischen und/oder apparativen Aufwand gewährleistet werden kann.

Diese Aufgabe wird durch das im Anspruch 1 beschriebene Verfahren gelöst, das dadurch gekennzeichnet ist, daß dem abgeschlossenen System zumindest zeitweise abwechselnd die Luft unter einem über dem Außendruck liegenden Preßdruck zugeführt und anschließend unter einem unter dem Außendruck liegenden Saugdruck abgezogen wird, wobei die Druckdifferenz zwischen dem Preßdruck und dem Saugdruck zwischen 10 bis 300 mbar liegt.

Mit diesem Verfahren ist sichergestellt, daß auch die Randzonen der Poreninnenräume, die sich im Haufwerk, der Rotte, zwangsläufig bilden, hinreichend mit Sauerstoff versorgt werden, so daß die Bildung von Nestern mit unzureichender Verrottung zumindest weitgehend vermieden wird. Das Verfahren geht von dem Grundgedanken aus, daß nur die Einstellung eines unter dem Außendruck liegenden Druckes die notwendige Saugkraft erzeugt, um in den Poreninnenräumen des Haufwerkes einen hinreichenden Gasabzug zu bewirken, wonach durch gezielte zeitlich spätere Aufbringung eines Luft-Überdruckes der betreffende Poreninnenraum mit Frischluft versorgt wird. Hierdurch wird der Luft-Austausch, insbesondere die Sauerstoffzufuhr, im Bereich der gesamten Haufwerkschüttung entscheidend verbessert.

Das Kompostierverfahren setzt ein abgeschlossenes System voraus, in dem eine zu dessen Durchführung ausreichende Druckaufbringung über und unter dem Außendruck gewährleistet werden kann. Das abgeschlossene System kann aus einem oder mehreren Großbehältern, wie Containern, aber auch kleinen abgeschlossenen Behältern bestehen, die in Parallelschaltung zeitgleich oder in sukzessiver zeitlicher Abfolge be- und entlüftet werden.

Weiterbildungen des erfindungsgemäßen Verfahrens sind in den Unteransprüchen beschrieben.

So soll die Druckdifferenz Δp zwischen dem Preßdruck und dem Saugdruck zwischen 10 bis 300 mbar, vorzugsweise zwischen 10 und 150 mbar, liegen. Die Druckdifferenz zwischen dem Saugdruck und dem Außendruck kann gleich groß der Druckdifferenz zwischen dem Preßdruck und dem Außendruck sein, sie kann jedoch auch absolut betrachtet geringere Werte bis zu einem Drittel der Druckdifferenz zwischen dem Preßdruck und dem Außendruck betragen.

Nach den meisten der nach dem Stand der Technik bekannten und in der Praxis ausgeführten Verfahren wird anhand von O₂-und/oder CO₂- und/oder Temperaturmessungen in der Abluft der Verrottungsgrad überprüft. Die betreffenden aus der Abluft gewonnenen Werte geben jedoch keinen Aufschluß darüber, ob die Verrottung homogen verläuft.

Nach einer weiteren Ausgestaltung der Erfindung wird daher vorgeschlagen, die Temperatur, den Sauerstoffgehalt, den Kohlendioxidgehalt, den Methangehalt und/oder den Gas-Volumenfluß in der Rotte zu messen und als Regelgröße für die Preßdruck- und/oder die Saugdruck-Aufgabe zu verwenden. Hierzu können eine oder mehrere möglichst gleichmäßig in dem Rotte-Haufwerk verteilt angeordnete Meßfühler verwendet werden. Zur Messung des Sauerstoff-, des Kohlendioxid- und/oder des Methan-Gehaltes kann ein einziges Saugrohr benutzt werden, das während der Preßdruck- oder der Saugdruck-Aufbringung Gasproben entnimmt, deren Zusammensetzung in einem Analysegerät festgestellt wird, das mit einem Steuergerät verbunden ist. In dieses Steuergerät lassen sich Sollwert-Vorgaben, insbesondere als Bereichangaben, eingeben, die nach einem Soll-Ist-Vergleich eine entsprechende Preßdruck- und/oder Saugdruck-Änderung sowohl hinsichtlich der Druckamplitude als auch der zeitlichen Druckaufgabe steuern. Vorzugsweise wird die Preßdruck-Luftzufuhr auf einen Saugdruck umgeschaltet, sobald sich in der Rotte konstante Sauerstoff-, Kohlendioxid- und/oder Methanwerte eingestellt haben. Die konstanten bzw. im wesentlichen konstanten Gasanteile zeigen nämlich auf, ob der vorab zugeführte, in der Luft enthaltene Sauerstoff im Haufwerk verbraucht worden ist. Die Volumenflußmessung erfolgt beispielsweise durch Venturi-Düsen oder ähnliche Verfahren. Aus der Gaskonzentration und dem Fluß kann über eine Massenbilanz zusätzlich auf die Umsetzung geschlossen werden. Da der Biomüll im Mittel ähnlich ist, läßt sich eine empirisch ermittelte Massenbilanz erstellen, deren Ergebnisse später zu Steuerzwecken eingesetzt werden.

Vorzugsweise sind die Dauer der Preßdruckaufgabe und die Dauer der Saugdruckaufgabe etwa gleich lang, wobei sich jeweils Zeiträume zwischen 2 und 3 Minuten anbieten.

Erfahrungsgemäß braucht die Rotte neben der diskontinuierlichen Frischluftzufuhr auch Ruhepausen, in denen nach Sauerstoffaufnahme bakterielle Verrottungsarbeit stattfindet.

Nach einer Weiterbildung der Erfindung wird daher vorgeschlagen, daß auf die Preßdruckaufgabe unmittelbar eine Saugdruck-aufgabe folgt und daß vor der nächsten Preßdruckaufgabe nach einer Entlüftung ein Pausenintervall ohne Druckaufgabe eingestellt wird, das vorzugsweise 10 bis 15 Minuten dauern soll. Die Länge der jeweiligen Preßdruck-, Saugdruck- und Pausen-Intervalle ist im Einzelfall der Haufwerkzusammensetzung, insbesondere dessen Feuchtegehalt, Temperatur und Verrottungsgrad anzupassen. Vorzugsweise wird die Länge des Pausenintervalls durch die in der Rotte gemessenen Sauerstoffgehalte gesteuert, so daß bei zu schnellem Sauerstoffabfall in der Rotte das Pausenintervall sukzessive verkürzt wird. Hierdurch kann die Pausenlänge in Abhängigkeit der während der Be- und Entlüftung gemessenen Sauerstoffgehalte automatisch reguliert werden.

Da der zur Kompostierung verwendete Abfall im Regelfall eine höhe Feuchte aufweist, wird zur besseren Trocknung des Rottematerial die mit Preßdruck in die Rotte geleitete Luft vorgewärmt, vorzugsweise auf 30°C bis 50°C. Dies kann ggf. unter Nutzung der in dem geschlossenen System entstehenden Prozeßwärme geschehen.

In Ausnahmefällen, nämllich bei Nichteinhaltung vorgegebener Wertebereiche für die Temperatur und/oder die Gehalte an Sauerstoff, Kohlendioxid und/oder Methan in der Rotte wird der Rottevorgang vorzeitig abgebrochen und das Haufwerk neu aufgeschüttet bzw. neu gemischt.

Zur Durchführung des vorbeschriebenen Verfahrens wird erfindungsgemäß der im Anspruch 10 beschriebene geschlossene Belüftungsreaktor verwendet, der dadurch gekennzeichnet ist, daß in den Belüftungsreaktor (außer dem Temperaturmeßfühler) zusätzlich mindestens ein Meßfühler zur Sauerstoff-, Kohlendioxid- und/oder Methan-Messung hineinragt, der mit der Regeleinrichtung verbunden ist, daß das Gebläse als umsteuerbares Druck-/Sauggebläse ausgebildet ist und daß die im oberen Bereich des Belüftungsreaktors angeordnete Abgasleitung ein mit der Regeleinrichtung verbundenes Drosselventil aufweist. Die Verwendung eines Drosselventiles erspart ein zweites Gebläse. Das vorhandene Gebläse, über das in die Sohle des Belüftungsreaktors Luft unter Überdruck eingeführt wird, kann bei geschlossenem Drosselventil (in der oberen Abgasleitung) nach Umsteuerung als Sauggebläse benutzt werden. Dies bedeutet, daß gegen dieses Drosselventil sowohl ein Über- als auch ein Unterdruck in Relation zum Außendruck aufgebaut wird. Zur Entlüftung, d.h., zum Abschluß der Saugdruckaufbringung, wird das Gebläse abgeschaltet und/oder das Drosselventil geöffnet, so daß bodenseitig wie dachseitig Luft einströmen kann.

Aus genannten Gründen empfiehlt es sich, die über das Druckgebläse zugeführte Luft vorzuwärmen, weshalb in der Luftzufuhrleitung eine Heizvorrichtung angeordnet ist, die vorzugsweise durch einen Wärmetauscher gespeist wird, durch den Energie aus der Abgasleitung entnehmbar ist. Der Wärmetauscher selbst kann die Heizvorrichtung darstellen.

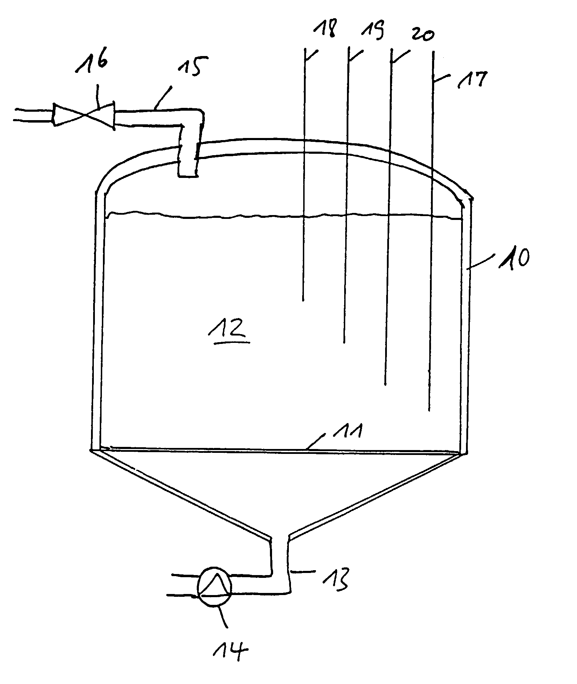

Ein Ausführungsbeispiel der Erfindung ist in der Zeichnung dargestellt, die einen Belüftungsreaktor im Querschnitt zeigt.

Der Belüftungsreaktor 10 besitzt einen Sieblochboden 11, durch den oberhalb diesem aufgeschüttetes Haufwerk 12 von unten nach oben belüftet und in umgekehrter Richtung entlüftet werden kann. Der Belüftungsreaktor 10 besitzt eine untere Luftzufuhr- und Luftabfuhrleitung 13, in der ein umschaltbares Gebläse 14 angeordnet ist. Im Dachbereich besitzt der Belüftungsreaktor eine Gasabzugsleitung 15 mit einem Drosselventil 16. In das Haufwerk ragen neben einem Temperaturfühler 17 noch weitere Fühler 18, 19 und 20, die nur exemplarisch dargestellt sind. Es können auch mehrere Temperaturfühler 17 mit unterschiedlicher Eindringtiefe in das Haufwerk 12 verwendet werden. Ebenso sollten die Fühler 18 bis 20 in Form von Gasentnahmerohren ausgebildet sein, durch die Gasproben entnommen und mittels eines nicht dargestellten Analysegerätes hinsichtlich ihrer Zusammensetzung überprüft werden. Das Analysegerät ist mit einer nicht dargestellten Steuereinrichtung verbunden, die gleichzeitig die Drossel 16 und das Saug-Druckgeläse 14 ansteuert.

Der Reaktor wird folgendermaßen verwendet. Nach Befüllen mit Haufwerk 12 werden die Meßfühler 17 bis 20, falls sie nicht feststehend angeordnet sind, in das Haufwerk eingeschoben, wobei bei mehreren Meßfühlern eine möglichst gleichmäßige Verteilung und Haufwerk angestrebt wird. Nach Verschließen des Belüftungsreaktors 10 wird in periodischer Abfolge nacheinander zunächst über das Gebläse 14 bei geschlossenem Ventil 16 vorgewärmte Luft unter einem über dem Außendruck liegenden Preßdruck, etwa mit einem Druck von 50 mbar über dem Außendruck während einer Zeitdauer von 2 bis 3 Minuten eingeführt bzw. so lange, bis der in der Rotte 12 gemessene Sauerstoffgehalt auf einen bestimmten, ggf. konstanten Wert angestiegen ist, was mit einem entsprechenden Abfall des CO₂-Gehaltes einhergeht. Etwaige CH₄-Überschüsse, die während der Verrottung auftreten, jedoch unerwünscht sind, zeigen an, daß die Luftzufuhr noch aufrechterhalten werden soll. Anschließend wird bei nach wie vor geschlossener Drossel 16 das Gebläse auf Saugbetrieb umgeschaltet und Gas aus dem Belüftungsreaktor 10 abgezogen, was über eine Zeitdauer von 2 bis 3 Minuten geschehen soll. Nach insgesamt 4 bis 6 Minuten, die sich aus den vorbeschriebenen Zeiträumen zusammensetzen, wird das Drosselventil 16 geöffnet und gleichzeitig das Gebläse 14 abgeschaltet, wo es im Leerlaufzustand über ein Pausenintervall von 10 bis 12 Minuten abgeschaltet bleibt. In dieser Zeit herrscht nach einer kurzzeitigen Entlüftung im Belüftungsreaktor 10 der gleiche Druck wie der Außendruck. Nach Ablauf des Pausenintervalls wird abermals zunächst Preßdruck und anschließend Saugdruck aufgegeben, bevor wiederum das Gebläse, wie beschrieben, abgeschaltet wird.

Vorzugsweise wird das Verfahren selbstregulierend durchgeführt, nämlich in Abhängigkeit der während der Preß- und Saug-Druck-Aufbringung gemessenen Gas- und Temperaturwerte.

## Patentansprüche

1. Verfahren zur Kompostierung von organischen Abfällen und/oder Klärschlamm, welche als Haufwerk in einem abgeschlossenen System, vorzugsweise einem Belüftungsreaktor (10) mit einer für den Rottevorgang notwendigen Luft durchströmt werden, deren Menge in Abhängigkeit von den aus dem System gewonnenen Meßwerten regelbar ist,
**dadurch gekennzeichnet**,
daß dem abgeschlossenen System zumindest zeitweise abwechselnd die Luft unter einem über dem Außendruck liegenden Preßdruck zugeführt und anschließend unter einem unter dem Außendruck liegenden Saugdruck abgezogen wird, wobei die Druckdifferenz zwischen dem Preßdruck und dem Saugdruck zwischen 10 bis 300 mbar liegt.

2. Verfahren nach Anspruch 1, dadurch gekennzeichnet, daß die Druckdifferenz zwischen dem Preßdruck und dem Saugdruck zwischen 10 und 150 mbar liegt.

3. Verfahren nach Anspruch 1 oder 2, dadurch gekennzeichnet, daß die Temperatur, der Sauerstoffgehalt, der Kohlendioxidgehalt, der Methangehalt und/oder der Gas-Volumenfluß in der Rotte gemessen und als Regelgröße für die Preßdruck- und/oder die Saugdruckaufgabe verwendet werden.

4. Verfahren nach einem der Ansprüche 1 bis 3, dadurch gekennzeichnet, daß die Preßdruck-Luftzufuhr auf Saugdruck (Luftabfuhr) umgeschaltet wird, sobald sich in der Rotte konstante Sauerstoff-, Kohlendioxid- und/oder Methan-Werte eingestellt haben, wobei vorzugsweise die Dauer der Preßdruckaufgabe und die Dauer der Saugdruckaufgabe etwa gleich lang ist, vorzugsweise jeweils zwischen 2 und 3 Minuten liegt.

5. Verfahren nach einem der Ansprüche 1 bis 4, dadurch gekennzeichnet, daß auf die Preßdruckaufgabe unmittelbar eine Saugdruckaufgabe folgt und daß vor der nächsten Preßdruckaufgabe nach einer Entlüftung ein Pausenintervall ohne Druckaufgabe, vorzugsweise von 10 bis 15 Minuten, eingestellt wird.

6. Verfahren nach Anspruch 5, dadurch gekennzeichnet, daß die Länge des Pausenintervalls durch die in der Rotte gemessenen Sauerstoffgehalte gesteuert wird, so daß bei zu schnellem Sauerstoffabfall in der Rotte das Pausenintervall sukzessive verkürzt wird.

7. Verfahren nach einem der Ansprüche 1 bis 6, dadurch gekennzeichnet, daß die unter Preßdruck in die Rotte geleitete Luft vorgewärmt ist, vorzugsweise auf 30°C bis 50°C.

8. Verfahren nach einem der Ansprüche 1 bis 7, dadurch gekennzeichnet, daß bei Nichteinhaltung vorgegebener Wertebereiche für die Temperatur und/oder die Gehalte an Sauerstoff, Kohlendioxid und/oder an Methan in der Rotte der Rottevorgang abgebrochen wird.

9. Vorrichtung zur Durchführung des Verfahrens nach einem der Ansprüche 1 bis 8, mit einem geschlossenen Belüftungsreaktor (10), in dessen Boden ein Gebläse (14) mit einem Verteiler (11) zum Einblasen der Luft im wesentlichen über den gesamten Querschnitt des von dem Belüftungsreaktor (10) umschlossenen Haufwerkes (12) und in dem mindestens ein in das Haufwerk (12) hineinragender Temperaturmeßfühler (17) vorgesehen sind, die über eine Regeleinrichtung miteinander verbunden sind, und der eine Abgasleitung (15) aufweist, dadurch gekennzeichnet, daß in dem Belüftungsreaktor (10) zusätzlich mindestens ein Meßfühler (18 bis 20) zur Sauerstoff-, Kohlendioxid- und/oder Methanmessung hineinragt, der mit der Regeleinrichtung verbunden ist, daß das Gebläse (14) als umsteuerbares Druck-/Sauggebläse ausgebildet ist und daß die im oberen Bereich des Belüftungsreaktors angeordnete Abgasleitung (15) ein mit der Regeleinrichtung verbundenes Drosselventil (16) aufweist.

10. Vorrichtung nach Anspruch 9, dadurch gekennzeichnet, daß in der Luftzufuhrleitung (13) eine Heizvorrichtung angeordnet ist, die vorzugsweise durch einen Wärmetauscher gespeist wird, durch den Energie aus der Abgasleitung entnehmbar ist.

## Claims

1. Method for composting organic waste and/or sewage sludge in heaps in a closed system, preferably a forced air circulation reactor, which circulates the air necessary for the rotting process through the waste, the air flowrate being controlled in dependence on measured system parameters,
**characterised in that**
the air is supplied in the closed system at least temporary alternating at a pressure above the external pressure and subsequently withdrawn again at a suction pressure below the external pressure, whereby the pressure difference between the compressive pressure and the suction pressure lies between 10 and 300 mbar.

2. Method according to claim 1, characterised in that the pressure difference between the compressive pressure and the suction pressure lies between 10 and 150 mbar.

3. Method according to claim 1 or 2, characterised in that the temperature, the oxygen content, the carbon dioxide content, the methane content and/or the gas volume flow rate in the rotting heap are measured and used as a controlled variable for the compressive pressure and/or the suction pressure-supply.

4. Method according to one of the claims 1 to 3,
characterised in that the compressive pressure air supply is changed over in a suction pressure (air withdrawal) as soon as constant values of oxygen, carbon dioxide and/or methane are set in the rotting heap, whereby preferably the duration of the compressive pressure supply and the duration of the suction pressure supply are essentially equal, preferably each duration being between 2 and 3 minutes.

5. Method according to one of the claims 1 to 4,
characterised in that the suction pressure supply follows immediately after the compressive pressure supply and that an interruption interval without pressure supply, preferably over 10 to 15 minutes is set after an air suction and before a compressive pressure supply.

6. Method according to claim 5, characterised in that the duration of the interruption interval is controlled by the oxygen contents measured in the rotting heap so that the interruption interval is successively shortened in case of an too rapid oxygen decrease in the rotting heap.

7. Method according to one of the claims 1 to 6,
characterised in that the air supplied under pressure in the rotting heap is preheated, preferably up to 30°C to 50°C.

8. Method according to one of the claims 1 to 7,
characterised in that the rotting process is stopped when the preset value ranges for the temperature and/or the contents of oxygen, carbon dioxide and/or methane are not retained in the rotting heap.

9. Device for accomplishing the method according to one of the claims 1 to 8, with a closed ventilating reactor (10), which bottom has a blower (14) with a distributor (11) for blowing in air essentially over the whole profile of the heap surrounded by the ventilating reactor (10), and at least one temperature measuring device (17) projecting into the heap (12) and being connected together and to a control device, said ventilating reactor having an exhaust pipe (15) characterised in that in addition at least one device (18 to 20) for measuring the oxygen, carbon dioxide, and/or methane content projects in the ventilation reactor (10), said device being connected to the control device, that the blower (14) is a switchable compression-/suction-blower and that the exhaust pipe (15) in the upper part of the ventilating reactor has a throttle valve (16) being connected with the control device.

10. Device according to claim 9, characterised in that a heating device is arranged in the air supply pipe (13) said heating device being preferably supplied by a heat exchanger which takes energy from the exhaust pipe.

## Revendications

1. Procédé de compostage de déchets organiques et/ou de boues de curage qui, comme tas, dans un système fermé, de préférence dans un réacteur de ventilation (10), sont traversés d'un air nécessaire au processus de pourriture, la quantité de l'air pouvant être réglée en fonction des valeurs mesurées obtenues du système,
**caractérisé par le fait**
que, au moins temporairement, de manière alternante, l'air est amené au système fermé à une pression de compression supérieure à la pression extérieure et est ensuite évacué à une pression d'aspiration inférieure à la pression extérieure, la différence de pression entre la pression de compression et la pression d'aspiration étant comprise entre 10 et 300 mbar.

2. Procédé selon la revendication 1, caractérisé par le fait que la différence de pression entre la pression de compression et la pression d'aspiration est comprise entre 10 et 150 mbar.

3. Procédé selon la revendication 1 ou 2, caractérisé par le fait que la température, la teneur en oxygène, la teneur en dioxyde de carbone, la teneur en méthane et/ou le flux de volume de gaz dans le tas soumis à la pourriture sont mesurés et utilisés comme variable commandée pour l'alimentation de pression de compression et/ou de pression d'aspiration.

4. Procédé selon l'une des revendications 1 à 3, caractérisé par le fait que l'on passe de l'admission d'air à pression de compression à la pression d'aspiration (évacuation d'air), dès que des valeurs constantes d'oxygène, de dioxyde de carbone et/ou de méthane sont réglées dans le tas soumis à la pourriture, de préférence, la durée de l'alimentation de pression de compression et la durée de l'alimentation de pression d'aspiration étant à peu près égales, de préférence chaque durée étant comprise entre 2 et 3 minutes.

5. Procédé selon l'une des revendications 1 à 4, caractérisé par le fait que l'alimentation de pression de compression est suivie immédiatement d'une alimentation de pression d'aspiration, et qu'un intervalle d'interruption sans alimentation de pression, de préférence de 10 à 15 minutes, est réglé après une aspiration d'air et avant l'alimentation suivante de pression.

6. Procédé selon la revendication 5, caractérisé par le fait que la durée de l'intervalle d'interruption est commandée par les teneurs en oxygène mesurées dans le tas soumis à la pourriture, de sorte que, dans le cas d'une chute trop rapide de l'oxygène dans le tas soumis à la pourriture, l'intervalle d'interruption est réduit successivement.

7. Procédé selon l'une des revendications 1 à 6, caractérisé par le fait que l'air admis sous pression de compression dans le tas soumis à la pourriture est préchauffé, de préférence à une température comprise entre 30°C et 50°C.

8. Procédé selon l'une des revendications 1 à 7, caractérisé par le fait que le processus de pourriture est arrêté lorsque les gammes prédéterminées de valeurs pour la température et/ou pour les teneurs en oxygène, en dioxyde de carbone et/ou en méthane dans le tas soumis à la pourriture ne sont pas observées.

9. Dispositif pour la mise en oeuvre du procédé selon l'une des revendications 1 à 8, comprenant un réacteur fermé de ventilation (10) dans le fond duquel est prévue une soufflante (14) avec un distributeur (11) destiné à insuffler l'air pour l'essentiel sur l'ensemble de la section du tas (12) entouré du réacteur de ventilation (10), et dans lequel est disposé du moins un capteur de température (17) se projetant dans le tas (12) qui sont reliés entre eux par l'intermédiaire d'un dispositif de réglage, ledit réacteur de ventilation présentant une conduite d'échappement (15), caractérisé par le fait que, en sus, du moins un capteur (18 à 20) destiné à mesurer la teneur en oxygène, en dioxyde de carbone et/ou en méthane se projette dans le réacteur de ventilation (10), qui est relié au dispositif de réglage, que la soufflante (14) est réalisée comme ventilateur soufflant/aspirant qui peut être renversé et que la conduite d'échappement (15) disposée dans la zone supérieure du réacteur de ventilation présente une soupape d'étranglement (16) qui est reliée au dispositif de réglage.

10. Dispositif selon la revendication 9, caractérisé par le fait qu'un dispositif de chauffage est disposé dans la conduite d'amenée d'air (13), ledit dispositif de chauffage étant alimenté, de préférence, par un échangeur de chaleur par lequel de l'énergie peut être prélevée de la conduite d'échappement.
